(19) Europäisches Patentamt
European Patent Office
Office européen des brevets

(11) EP 2 128 731 A1

(12) DEMANDE DE BREVET EUROPEEN

(43) Date de publication:
02.12.2009 Bulletin 2009/49

(51) Int Cl.:
*G05D 1/00* (2006.01)    *G05D 1/02* (2006.01)
*B60W 40/02* (2006.01)    *G01C 21/20* (2006.01)

(21) Numéro de dépôt: 09161419.8

(22) Date de dépôt: 28.05.2009

(84) Etats contractants désignés:
AT BE BG CH CY CZ DE DK EE ES FI FR GB GR
HR HU IE IS IT LI LT LU LV MC MK MT NL NO PL
PT RO SE SI SK TR

(30) Priorité: 30.05.2008 FR 0802983

(71) Demandeur: Thales
92200 Neuilly-sur-Seine (FR)

(72) Inventeur: Soulignac, Michaël
33140 VILLENAVE D'ORNON (FR)

(74) Mandataire: Lucas, Laurent Jacques
Marks & Clerk France
Conseils en Propriété Industrielle
Immeuble " Visium "
22, avenue Aristide Briand
94117 Arcueil Cedex (FR)

(54) **Procédé de détermination de trajectoire en présence de courants variables dans le temps**

(57) L'invention concerne un procédé de détermination de trajectoire d'un mobile entre une cellule de départ et une cellule d'arrivée ($Z_B$) situées dans un environnement donné en présence de courants variables dans l'espace et dans le temps. L'environnement est discrétisé en cellules. L'invention consiste principalement en une généralisation de l'algorithme de propagation d'onde introduit par Dorst et Trovato selon lequel un front d'onde (Fo) est propagé à partir de la cellule de départ jusqu'à ce que la tête (He) de ce front d'onde (Fo) atteigne la cellule d'arrivée ($Z_B$). Selon l'invention, la propagation du front d'onde (Fo) comprend une étape (323) consistant à associer une fonction de coût ($c_v(d)$) à chaque cellule. Cette fonction de coût ($c_v(d)$), représentant le temps de parcours entre la cellule de départ et la cellule courante, dépend de l'instant de départ ($d$) à partir de la cellule de départ.

L'invention présente pour principal avantage la possibilité de déterminer, conjointement à la trajectoire optimale, l'instant de départ optimal pour le mobile.

FIG.3

Printed by Jouve, 75001 PARIS (FR)

EP 2 128 731 A1

**Description**

L'invention concerne un procédé de détermination de trajectoire pour un mobile entre un point de départ et un point d'arrivée situés dans un environnement donné en présence de courants variables dans le temps. Elle s'applique notamment à la recherche d'une trajectoire optimale et d'un instant de départ optimal pour un mobile se déplaçant dans des conditions de courant non uniforme et non constant. Par trajectoire optimale et instant de départ optimal, on entend respectivement la trajectoire et l'instant de départ permettant à l'engin mobile de relier le point de départ au point d'arrivée en un minimum de temps. La détermination d'une trajectoire est couramment appelée planification de trajectoire. L'engin mobile est par exemple un avion sans pilote, également appelé drone, ou un robot autoguidé sous-marin. Selon le cas, les courants auxquels est soumis l'engin mobile sont soit des courants aériens, soit des courants marins. Dans les deux cas, l'engin mobile se déplace généralement à des vitesses relativement faibles, ces vitesses pouvant même être inférieures à celles des courants. Par conséquent, la prise en compte de ces courants est indispensable afin de fournir la trajectoire et l'instant de départ optimaux pour le mobile. Le domaine d'application concerne les mobiles aériens, de surface ou sous-marins se déplaçant sur une trajectoire dans un espace à deux ou trois dimensions.

Actuellement, les procédés de planification de trajectoire en présence de courants utilisent principalement des techniques d'optimisation continue, des algorithmes génétiques ou des algorithmes de propagation d'onde adaptés afin de prendre en compte la présence de courants. Les techniques d'optimisation continue sont par exemple décrites dans INANC, T., S.C. SHADDEN et J.E. MARSDEN. Optimal trajectory generation in ocean flows, Proceedings of the American Control Conference, 2005, p. 674-679 et dans PANNEQUIN, J., A. BAYEN, I. MITCHELL, H. CHUNG et S. SASTRY. Multiple aircraft deconflicted path planning with weather avoidance constraints, Proceedings of the AIAA Guidance, Navigation and Control Conference, 2007. Les algorithmes génétiques sont par exemples décrits dans RUBIO, J. et S. KRAGELUND. The trans-pacific crossing: long range adaptive path planning for UAVs through variable wind fields, Proceedings of the Digital Avionics Systems Conference (2) et dans ALVAREZ, A., A. CAITI et R. ONKEN. Evolutionary path planning for autonomous vehicles in a variable ocean, Journal of Oceanic Engineering (29), 2004, p. 418-429. Les algorithmes de propagation d'onde adaptés à la présence de courants sont par exemple décrits dans GARAU, B., A. ALVAREZ et G. OLIVER. Path planning of autonomous underwater vehicles in current fields with complex spatial variability: an A* approach, Proceedings of the International Conference on Robotics and Automation, 2005, p. 194-198, dans PETRES, C., Y. PAILHAS, Y. PETILLOT et D. LANE. Underwater path planning using fast marching algorithms, Proceedings of Oceans 2005 - Europe, 2005, p. 814-819 et dans SOULIGNAC, M., P. TAILLIBERT et M. RUEHER. Adapting the wavefront expansion in presence of strong currents, Proceedings of the International Conference on Robotics and Automation, 2008. Ces procédés permettent certes de déterminer la trajectoire minimisant le temps de parcours entre le point de départ et le point d'arrivée pour un instant de départ donné, mais ils ne permettent pas de déterminer, simultanément à cette trajectoire, l'instant de départ optimal lorsque les courants évoluent en fonction du temps. Une solution consiste, dans un premier temps, à déterminer une trajectoire optimale et le temps de parcours associé à cette trajectoire pour différents instants de départ et, dans un deuxième temps, à choisir la trajectoire optimale pour laquelle le temps de parcours est minimal. Cependant, cette solution ne permet pas de déterminer précisément l'instant de départ optimal, les temps de parcours étant déterminés de façon discrète pour différents instants de départ.

Un but de l'invention est notamment de pallier cet inconvénient en proposant un procédé de détermination de trajectoire permettant de déterminer conjointement une trajectoire optimale et un instant de départ optimal. La détermination plus précise de l'instant de départ optimal permet par la suite de mieux optimiser la trajectoire. Son intérêt opérationnel est, entre autres, de réduire les coûts économiques de transport (moyens humains et matériels durant et après l'opération), de réduire la vulnérabilité des plateformes dans des zones de menace et d'augmenter la qualité du service en réduisant les temps d'opération. A cet effet, l'invention a pour objet un procédé de détermination d'une trajectoire d'un mobile entre un point de départ et un point d'arrivée situés dans un environnement donné en présence de courants, l'environnement étant discrétisé en plusieurs cellules comportant chacune un point de passage possible pour le mobile, à chaque cellule étant associé un vecteur vitesse de courant variable dans le temps et un coût $c_Z(d)$. Selon l'invention, le coût $c_Z(d)$ associé à une cellule représente le temps de parcours entre le point de départ et le point de passage de ladite cellule en fonction d'un instant de départ du point de départ compris dans une fenêtre temporelle et le procédé comporte les étapes suivantes :

- initialiser les fonctions de coût $c_Z(d)$ des cellules de l'environnement et attribuer à un ensemble Fo de cellules la cellule contenant le point de départ,
- réitérer les étapes suivantes tant que le point d'arrivée n'est pas contenu dans un ensemble He de cellules :

  ○ déterminer, parmi l'ensemble Fo de cellules, l'ensemble He de cellules pour lesquelles le minimum $c_H(d_H)$ de la fonction de coût $c_H(d)$ est minimal,
  ○ déterminer un ensemble Vo de cellules adjacentes aux cellules de l'ensemble He et n'ayant pas déjà appartenu à l'ensemble He,

○ déterminer une fonction de coût $c_V(d)$ pour chaque cellule de l'ensemble Vo,
○ supprimer de l'ensemble Fo, les cellules appartenant à l'ensemble He et ajouter à cet ensemble Fo les cellules appartenant à l'ensemble Vo,

• déterminer la trajectoire du mobile à partir des fonctions de coûts $c_Z(d)$.

Selon une forme particulière de réalisation, l'étape de détermination de la fonction de coût $c_V(d)$ comprend une étape consistant à déterminer le minimum de différentes fonctions de coût $c_V^i(d)$ pour chaque instant de départ de la fenêtre temporelle, chaque fonction de coût $c_V^i(d)$ correspondant au temps de parcours d'une trajectoire entre le point de départ et le point de passage de la cellule considérée et passant par l'une des différentes cellules de l'ensemble He.

Selon une forme particulière de réalisation, l'étape de détermination de la fonction de coût $c_V(d)$ comprend une étape consistant à composer une fonction de coût local $\tau'_{H,V}(t)$, représentant un temps de déplacement entre le point de passage d'une cellule considérée parmi l'ensemble He et le point de passage de la cellule considérée parmi l'ensemble Vo, avec la fonction de coût $c_H(d)$ associée à la cellule considérée parmi l'ensemble He selon la relation :

$$c_V(d) = \left[\tau'_{H,V} \circ \left(c_H + d\right)\right](d).$$

Selon une forme particulière de réalisation, des cartes de courants $C_i$, $i$ étant un entier compris entre 1 et $k$, modélisent les vecteurs vitesse des courants $\overline{w}_Z$ entre des instants $t = t_{i-1}$ et des instants $t = t_i$ dans un repère (O, x, y), les instants $t = t_0 = 0$ et $t = t_k = T$ formant les bornes de la fenêtre temporelle, et la fonction de coût local $\tau'_{H,V}(t)$ est définie à partir d'un coût local $\tau_{H,V}(t)$ par les relations :

• pour $t \geq t_k$,

$$\tau'_{H,V}(t) = \tau_{H,V}(T),$$

• $\forall i \in [1,k]$, si $t_i - \tau_{H,V}(t_{i-1}) \geq t_{i-1}$,

  • pour $t \in [t_{i-1}; t_i - \tau_{H,V}(t_{i-1})]$,

$$\tau'_{H,V}(t) = \tau_{H,V}(t_{i-1}),$$

  • pour $t \in [t_i - \tau_{H,V}(t_{i-1}); t_i]$,

$$\tau'_{H,V}(t) = \left(\frac{\tau'_{H,V}(t_i)}{\tau_{H,V}(t_{i-1})} - 1\right)t + \left[\tau_{H,V}(t_i) - t_i \cdot \left(\frac{\tau'_{H,V}(t_i)}{\tau_{H,V}(t_{i-1})} - 1\right)\right],$$

• $\forall i \in [1,k]$, si $t_i - \tau_{H,V}(t_{i-1}) < t_{i-1}$,

  • pour $t \in [t_{i-1}; t_i]$,

$$\tau'_{H,V}(t) = \left(\frac{\tau'_{H,V}(t_i)}{\tau_{H,V}(t_{i-1})} - 1\right)t + \left[\tau_{H,V}(t_i) - t_i \cdot \left(\frac{\tau'_{H,V}(t_i)}{\tau_{H,V}(t_{i-1})} - 1\right)\right],$$

$$\text{avec } \tau_{H,V}(t) = \frac{-\left(w_x(t).\delta x + w_y(t).\delta y\right) + \sqrt{v^2.\left(\delta x^2 + \delta y^2\right) - \left(w_x(t).\delta y - w_y(t).\delta x\right)^2}}{v^2 - w(t)^2},$$

les points de passage des cellules considérées étant repérés dans le repère (O, x, y) par des coordonnées $(x_H ; y_H)$ et $(x_V ; y_V)$, les quantités $\delta x = x_V - x_H$ et $\delta y = y_V - y_H$ représentant respectivement des différences d'abscisse et d'ordonnée entre les cellules considérées, $w_x(t)$ et $w_y(t)$ représentant des coordonnées dans le repère (O, x, y) des vecteurs vitesses de courants $\overline{w}_H$ et $\overline{w}_V$ associés aux cellules considérées à l'instant $t$, $w(t) = \sqrt{w_x(t)^2 + w_y(t)^2}$ représentant un module des vecteurs vitesse de courants $\overline{w}_H$ et $\overline{w}_V$ à l'instant $t$ et $v$ représentant une vitesse du mobile par rapport aux vecteurs vitesses de courants $\overline{w}_H$ et $\overline{w}_V$.

Selon une forme particulière de réalisation, dans le cas où les vecteurs vitesse de courants $\overline{w}_H$ et $\overline{w}_V$ associés aux cellules considérées diffèrent l'un de l'autre, le coût local $\tau_{H,V}(t)$ est décomposé en un premier coût local $\tau_{H,J}(t)$ représentant le temps de parcours entre le point de passage de la première cellule considérée et un point d'intersection des deux cellules considérées et un deuxième coût local $\tau_{J,V}(t)$ représentant le temps de parcours entre le point d'intersection des deux cellules considérées et le point de passage de la deuxième cellule considérée.

Selon une forme particulière de réalisation, l'étape d'initialisation des fonctions de coûts $c_Z(d)$ comprend une étape consistant à attribuer à chaque cellule une fonction de coût $c_Z(d)$ constante sur la fenêtre temporelle et de valeur infinie.

Selon une forme particulière de réalisation, l'étape de détermination de la trajectoire du mobile comprend les sous-étapes suivantes :

- déterminer un instant de départ correspondant au minimum de la fonction de coût $c_B(d)$ associée à la cellule contenant le point d'arrivée,
- évaluer les fonctions de coût $c_Z(d)$ de toutes les cellules de l'environnement pour cet instant de départ,
- déterminer une séquence de cellules partant de la cellule contenant le point d'arrivée et rejoignant la cellule contenant le point de départ en passant par les cellules dont les valeurs des fonctions de coût évaluées à l'instant de départ sont minimales.

L'invention a notamment pour avantage qu'elle permet de déterminer un temps de parcours pour tout instant de départ et, par conséquent, l'instant de départ optimal, la trajectoire optimale pouvant être déterminée pour cet instant de départ.

L'invention sera mieux comprise et d'autres avantages apparaîtront à la lecture de la description détaillée d'un mode de réalisation donné à titre d'exemple, description faite en regard de dessins annexés qui représentent :

- la figure 1, un exemple d'environnement discrétisé en cellules,
- la figure 2, un exemple de propagation d'un front d'onde,
- la figure 3, des étapes du procédé de détermination de trajectoire selon l'invention,
- la figure 4, des sous-étapes du procédé de détermination de trajectoire selon l'invention,
- la figure 5, un exemple de graphe d'une fonction de coût local entre deux cellules,
- la figure 6, une décomposition d'un coût local entre deux cellules,
- la figure 7, un exemple d'opération de minimum entre deux fonctions de coût,
- la figure 8, un exemple de graphe d'une fonction de coût associée à la cellule d'arrivée.

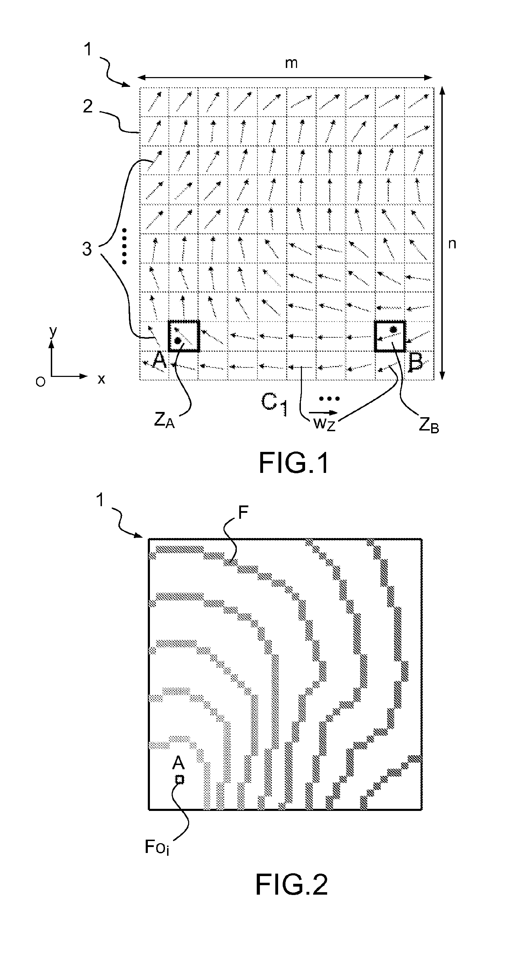

Le procédé de détermination de trajectoire selon l'invention est adapté de l'algorithme de propagation d'onde introduit par Dorst et Trovato. Cet algorithme est par exemple décrit dans DORST, L. et K. TROVATO. Optimal path planning by cost wave propagation in metric configuration space, Proceedings of SPIE - The International Society for Optical Engineering, 1988, p. 186-197. Cet algorithme de propagation d'onde, appelé algorithme de propagation d'onde classique, est introduit au regard des figures 1 et 2.

La figure 1 représente un environnement 1 planaire de dimension finie auquel un repère (O, x, y) est associé. L'environnement 1 comporte un point de départ A et un point d'arrivée B, pour un mobile, non représenté. L'environnement 1 est discrétisé par une grille 2 de dimension (m, n) délimitant m*n cellules Z. A chaque cellule Z est associé un point de passage 3 possible pour le mobile. Les points de passage 3 correspondent par exemple aux centres des cellules Z. Les points de départ A et d'arrivée B sont par exemple approximés par les points de passage 3 respectifs des cellules Z contenant ces points de départ A et d'arrivée B. Les cellules Z contenant les points de départ A et d'arrivée B sont respectivement appelées cellules de départ $Z_A$ et d'arrivée $Z_B$. A chaque cellule Z sont également associées les propriétés suivantes :

- $\overline{w}_Z(w_x;w_y)$ : un vecteur vitesse de courant correspondant au flux de courant dans ladite cellule. Le courant est considéré homogène dans l'ensemble de la cellule Z.
- $c_Z$ : un temps de parcours, également appelé coût, requis pour atteindre le point de passage 3 de la cellule Z à partir du point de départ A. Conformément à l'algorithme de propagation d'onde classique, lors d'une première étape, toutes les cellules Z adjacentes à la cellule de départ $Z_A$ sont explorées. En d'autres termes, un temps de parcours $c_Z$ est déterminé pour chaque cellule Z adjacente à la cellule de départ $Z_A$. Classiquement, pour une itération donnée, on appelle front d'onde Fo, l'ensemble des cellules F adjacentes aux cellules Z pour lesquelles un temps de parcours $c_Z$ n'a pas encore été déterminé. De même, pour une itération donnée, on appelle tête He du front d'onde Fo, l'ensemble des cellules H du front d'onde Fo pour lesquelles le temps de parcours $c_F$ est minimal. Lors des étapes ultérieures, on considère successivement les cellules H de la tête He du front d'onde Fo et on évalue les temps de parcours locaux entre ces cellules H et leurs cellules Z adjacentes. Le temps de parcours $c_Z$ associé à une cellule Z adjacente peut alors être déterminé par une simple addition du temps de parcours $c_H$ associé à la cellule H considérée de la tête He du front d'onde Fo et du temps de parcours local respectif. Dans le cas où plusieurs temps de parcours $c_Z$ sont attribués à une même cellule Z du fait d'une multiplicité de trajectoires, seul le temps de parcours $c_Z$ minimal est conservé. De fait, l'algorithme de propagation d'onde classique peut être considéré comme une propagation du front d'onde Fo à partir de la cellule de départ $Z_A$, la propagation étant effectuée de manière itérative au sein des cellules Z de la grille 2 jusqu'à ce que la tête He du front d'onde Fo atteigne la cellule d'arrivée $Z_B$. La propagation d'un front d'onde Fo est par exemple illustrée à la figure 2, où le front d'onde Fo est représenté à intervalles réguliers d'itérations. Par convention, le front d'onde initial $Fo_i$ correspond à la cellule de départ $Z_A$. La trajectoire optimale peut ensuite être construite en utilisant un algorithme couramment appelé "hill climbing" dans la littérature anglo-saxonne. Cet algorithme est l'équivalent de la méthode du gradient dans le domaine discret. Il consiste essentiellement à se déplacer de proche en proche au sein des cellules Z en partant de la cellule d'arrivée $Z_B$ et jusqu'à atteindre la cellule de départ $Z_A$, chaque déplacement étant déterminé afin d'atteindre la cellule Z de coût $c_Z$ minimal dans le voisinage direct de la cellule Z courante.
L'algorithme de propagation d'onde classique permet bien d'obtenir la trajectoire optimale pour un instant de départ donné, mais elle ne permet pas de déterminer l'instant de départ permettant de minimiser le temps de parcours entre le point de départ A et le point d'arrivée B lorsque la distribution des courants évolue au cours du temps.

Le procédé de détermination de trajectoire selon l'invention, appelé algorithme de propagation d'onde symbolique, consiste principalement en une généralisation de l'algorithme de propagation d'onde classique. Selon ce procédé de détermination de trajectoire, les coûts $c_Z$ associés aux points de passage 3 des cellules Z ne sont plus déterminés par des nombres, autrement dit une grandeur scalaire, mais par des fonctions dépendant de l'instant de départ. Les opérations de l'algorithme de propagation d'onde classique sont alors adaptées à ces nouvelles fonctions de coût.
Un exemple de réalisation du procédé de détermination de trajectoire selon l'invention est décrit ci-dessous. Pour cela, on introduit les notations suivantes :

- Z : une cellule repérée par les coordonnées ($x_Z$ ; $y_Z$) de son point de passage 3,
- d : un instant de départ à partir du point de départ A,
- $d_Z$ : un instant de départ optimal à partir du point de départ A pour atteindre la cellule Z. $d_B$ représente alors l'instant de départ optimal pour le mobile,
- W = [0;T] : une fenêtre temporelle délimitant les instants de départ d possibles,
- $c_Z(d)$ : une fonction de coût correspondant au temps de parcours entre le point de départ A et le point de passage 3 de la cellule Z en fonction de l'instant de départ d,
- $\tau'_{H,V}(t)$ : une fonction de coût local correspondant au temps de déplacement entre une cellule H et une cellule V en partant à l'instant t,
- $\overline{w}_Z(w_x;w_y)$ : un vecteur vitesse de courant correspondant au flux de courant dans la cellule Z, les coordonnées $w_x$ et $w_y$ du vecteur vitesse étant déterminées par rapport au repère (O, x, y),
- v : une vitesse du mobile par rapport aux courants, supposée constante,
- $C_i$ : des cartes de courants modélisant les vecteurs vitesse $\overline{w}_Z$ des courants entre les instants $t = t_{i-1}$ et $t = t_i$. L'indice i est un entier compris entre 1 et k. Par convention, on fixe $t_0 = 0$ et $t_k = T$ et on considère que les courants après $t = T$ restent modélisés par la carte de courants $C_k$.

Pour la suite de la description, on introduit également les définitions suivantes. On considère qu'une cellule Z est explorée lorsqu'une fonction de coût $c_Z(d)$ autre qu'une fonction de coût initiale lui est attribuée. On considère par ailleurs qu'une cellule Z est développée lorsque ses cellules voisines V sont explorées.

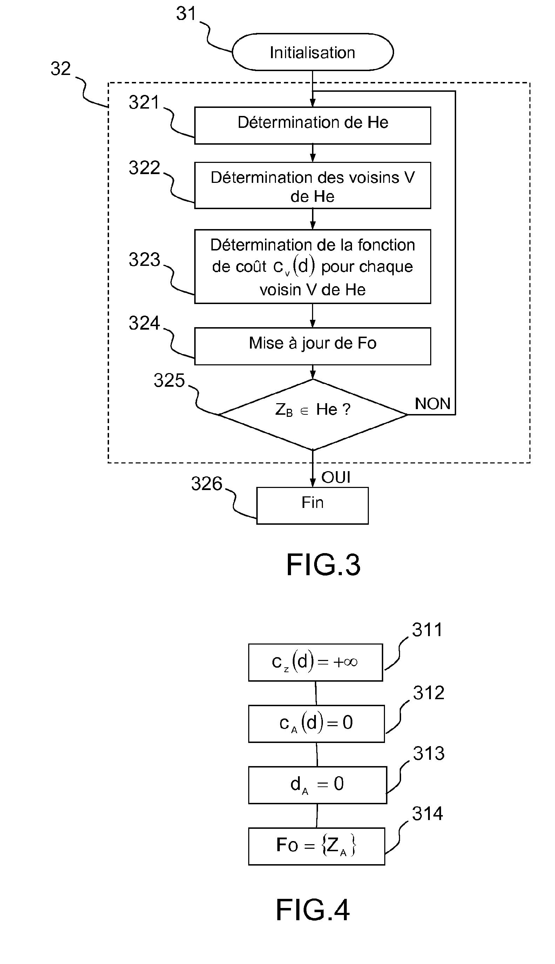

Le procédé de détermination de trajectoire selon l'invention peut être illustré par la figure 3. Il comprend notamment une étape 31 d'initialisation et une boucle 32 de propagation du front d'onde Fo.

L'étape 31 d'initialisation comporte par exemple les sous-étapes suivantes, représentées à la figure 4. Dans une étape 311, une fonction de coût $c_Z(d)$ constante sur la fenêtre temporelle $W$ et de valeur infinie est associée à chaque cellule Z de la grille 2. Toute valeur autre que l'infini peut être attribuée initialement aux fonctions de coût $c_Z(d)$ dans la mesure où cette valeur reste toujours supérieure à une valeur que pourrait prendre la fonction de coût $c_Z(d)$ lors d'une itération de la boucle 32 de propagation du front d'onde Fo. Dans une étape 312, une fonction de coût $c_A$ égale à la fonction nulle sur la fenêtre temporelle $W$ est associée à la cellule de départ $Z_A$. Dans une étape 313, l'instant de départ optimal $d_A$ pour la cellule de départ $Z_A$ peut être initialisée, par convention, à zéro. Cette étape 313 est facultative dans la mesure où la valeur attribuée à $d_A$ n'a aucune incidence sur le procédé de détermination de trajectoire. Dans une étape 314, le front d'onde Fo est initialisé à un ensemble de cellules F comprenant uniquement la cellule de départ $Z_A$. L'ordre des étapes 311 à 314 n'a pas d'importance dans la mesure où la fonction de coût $c_A(d)$ est une fonction nulle à la fin de l'étape 31 d'initialisation.

La boucle 32 de propagation du front d'onde Fo comporte par exemple les sous-étapes représentées à la figure 3. Dans une première étape 321, la tête He du front d'onde Fo est déterminée. La tête He du front d'onde Fo correspond à l'ensemble des cellules F du front d'onde Fo pour lesquelles le minimum $c_F(d_F)$ de la fonction de coût $c_F(d)$ est minimal. Lors d'une première itération de la boucle 32 de propagation du front d'onde Fo, la tête He du front d'onde Fo correspond au front d'onde Fo lui-même, c'est-à-dire à la cellule de départ $Z_A$. Dans une deuxième étape 322, les voisins V de la tête He du front d'onde Fo sont déterminés. La détermination des voisins V de la tête He du front d'onde Fo est par exemple réalisée en utilisant une fonction V(Z) renvoyant l'ensemble Vo des cellules V adjacentes à la cellule Z considérée et n'ayant pas déjà appartenu à la tête He du front d'onde Fo. La condition de non-appartenance préalable à la tête He du front d'onde Fo empêche le front d'onde Fo de se propager vers la cellule de départ $Z_A$. Dans une troisième étape 323, les cellules H appartenant à la tête He du front d'onde Fo sont développées. Autrement dit, pour chaque voisin V de la tête He du front d'onde Fo, une fonction de coût $c_V(d)$ est déterminée. Un exemple de détermination de cette fonction de coût $c_V(d)$ est exposé ci-dessous. Dans une quatrième étape 324, le front d'onde Fo est mis à jour. La mise à jour du front d'onde Fo consiste à supprimer du front d'onde Fo les cellules H appartenant à la tête He du front d'onde Fo et à lui ajouter les cellules V appartenant au voisinage de la tête He du front d'onde Fo. Dans une cinquième étape 325, on vérifie si la cellule d'arrivée $Z_B$ appartient à la tête He du front d'onde Fo. Si tel est le cas, il est mis fin à la boucle 32 de propagation du front d'onde Fo dans une étape 326. Sinon, la boucle 32 est répétée à partir de la première étape 321.

La suite de la description concerne la troisième étape 323 de la boucle 32 de propagation du front d'onde Fo, autrement dit la construction des fonctions de coût $c_V(d)$.

On considère dans un premier temps un coût local $\tau_{H,V}(t)$ correspondant au temps de parcours entre une cellule H et une cellule V en partant à l'instant $t$, autrement dit pour des vecteurs vitesse de courant $\overline{w}_H$ et $\overline{w}_V$ définis à l'instant $t$. Les vecteurs vitesse de courant $\overline{w}_H$ et $\overline{w}_V$ sont considérés égaux et notés $\overline{w}$ par la suite. Le vecteur vitesse de courant $\overline{w}$ est considéré constant pendant toute la durée du déplacement entre les cellules H et V. Le coût local $\tau_{H,V}(t)$ est par exemple utilisé dans l'algorithme de propagation d'onde classique. Il est par exemple défini par :

$$\tau_{H,V}(t) = \frac{-\left(w_x(t).\delta x + w_y(t).\delta y\right) + \sqrt{v^2.\left(\delta x^2 + \delta y^2\right) - \left(w_x(t).\delta y - w_y(t).\delta x\right)^2}}{v^2 - w(t)^2} \quad (1)$$

où $\delta x = x_V - x_H$ et $\delta_y = y_V - y_H$.

Dans la mesure où les vecteurs vitesse de courant $\overline{w}$ évoluent au cours du temps, le coût local $\tau_{H,V}(t)$, grandeur scalaire, doit être adapté afin d'anticiper l'impact de cette évolution, autrement dit afin de prendre en compte les différentes cartes de courants $C_i$. Dans un mode de réalisation, on introduit une fonction de coût local $\tau'_{H,V}(t)$ définie à partir du coût local $\tau_{H,V}(t)$ de la manière suivante :

- pour $t \geq T$,

$$\tau'_{H,V}(t) = \tau_{H,V}(T) \quad (2.1)$$

- $\forall i \in [1,k]$,

  ○ pour $t \in [t_{i-1}; t_i \text{-} \tau_{H,V}(t_{i-1})]$,

$$\tau'_{H,V}(t) = \tau_{H,V}(t_{i-1}) \qquad (2.2)$$

○ pour $t \in [t_i\text{-}\tau_{H,V}(t_{i-1});t_i]$,

$$\tau'_{H,V}(t) = \left(\frac{\tau'_{H,V}(t_i)}{\tau_{H,V}(t_{i-1})} - 1\right)t + \left[\tau_{H,V}(t_i) - t_i\cdot\left(\frac{\tau'_{H,V}(t_i)}{\tau_{H,V}(t_{i-1})} - 1\right)\right] \quad (2.3)$$

Conformément aux équations 2.1 à 2.3, la fonction de coût local $\tau'_{H,V}(t)$ est définie par tronçons pour plusieurs intervalles de temps, une transition étant susceptible de se produire aux instants $t_i$ et $t_i - \tau_{H,V}(t_{i-1})$ pour $i$ variant de 1 à $k$ - 1. Les intervalles de temps $[t_{i-1};t_i - \tau_{H,V}(t_{i-1})]$, pour $i$ variant de 1 à $k$ - 1, correspondent aux instants pour lesquels le parcours entre les points de passage 3 des cellules H et V est effectué intégralement dans la carte de courants $C_i$. La fonction de coût local $\tau'_{H,V}(t)$ a une valeur constante sur cet intervalle. Les intervalles de temps $[t_{i-1};t_i - \tau_{H,V}(t_{i-1})]$, pour $i$ variant de 1 à $k$ - 1 correspondent aux instants pour lesquels le parcours entre les points de passage 3 des cellules H et V est effectué en partie dans la carte de courants $C_i$ et en partie dans la carte de courants $C_{i+1}$. La portion de parcours effectuée dans la carte de courants $C_i$ est proportionnelle à l'intervalle de temps séparant l'instant de départ de la cellule H de l'instant $t_i$. Cette proportionnalité concorde avec la forme de l'équation 2.3, $\tau'_{H,V}(t) = m.t + p$, $m$ et $p$ étant deux constantes réelles. Dans certains cas, il peut arriver que l'instant $t_i - \tau_{H,V}(t_{i-1})$ précède l'instant $t_{i-1}$. Ce cas correspond à la situation dans laquelle le temps de parcours $\tau_{H,V}(t_{i-1})$ est supérieur à la durée de vie de la carte de courants $C_i$, c'est-à-dire la durée $t_i - t_{i-1}$. Dans ce cas, les équations 2.2 et 2.3 peuvent être remplacées par l'équation suivante :
○ pour $t \in [t_{i-1};t_i]$,

$$\tau'_{H,V}(t) = \left(\frac{\tau'_{H,V}(t_i)}{\tau_{H,V}(t_{i-1})} - 1\right)t + \left[\tau_{H,V}(t_i) - t_i\cdot\left(\frac{\tau'_{H,V}(t_i)}{\tau_{H,V}(t_{i-1})} - 1\right)\right] \quad (2.4)$$

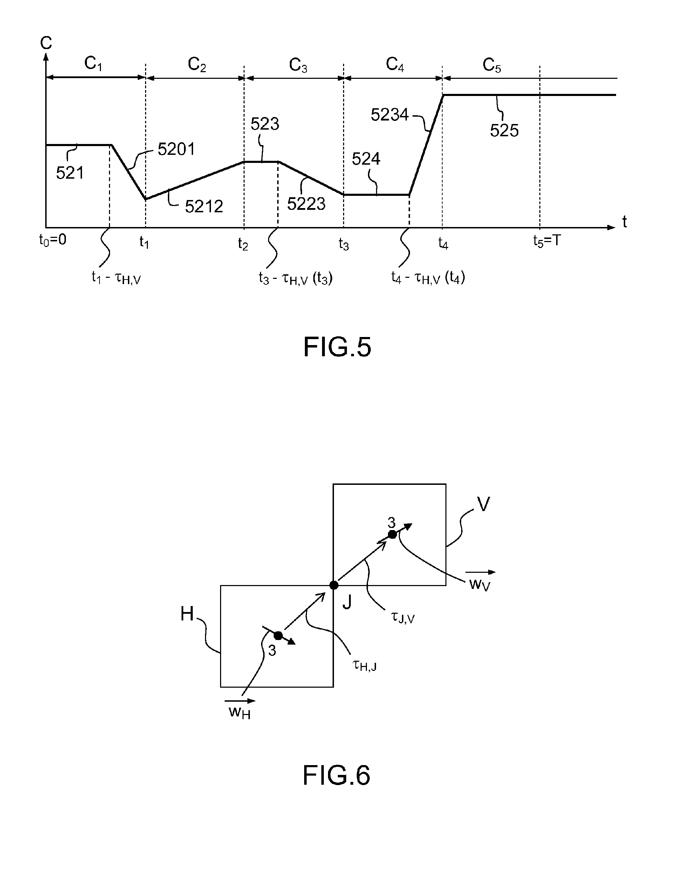

La figure 5 illustre, à travers un graphe 51, un exemple de fonction de coût local $\tau'_{H,V}(t)$ entre deux cellules H et V. Ce graphe 51 représente la fonction de coût local $\tau'_{H,V}(t)$ en fonction du temps $t$ pour cinq ($k$ = 5) cartes de courants $C_i$. On considère par conséquent une carte de courants $C_1$ entre les instants $t = t_0 = 0$ et $t = t_1$, une carte de courants $C_2$ entre les instants $t = t_1$ et $t = t_2$, une carte de courants $C_3$ entre les instants $t = t_2$ et $t = t_3$, une carte de courants $C_4$ entre les instants $t = t_3$ et $t = t_4$ et une carte de courants $C_5$ entre l'instant $t = t_4$ et l'infini. Le graphe 51 comporte une succession de segments de droites reliés entre eux aux instants $t_i$ et $t_i - \tau_{H,V}(t_{i-1})$ pour i variant de 1 à $k$ - 1. Sur ce graphe 51, les segments de droite 521, 523 et 524 de pente nulle correspondent aux équations 2.2, les segments de droite 5201, 5223 et 5234 de pente non nulle correspondent aux équations 2.3, le segment de droite 5212 correspond à l'équation 2.4 et le segment de droite 525 de pente nulle correspond à l'équation 2.1.
Dans le cas où les vecteurs vitesse de courants $\overline{w}_H$ et $\overline{w}_V$ respectivement associés aux cellules H et V diffèrent en module et/ou en direction l'un de l'autre, le coût local $\tau_{H,V}(t)$ nécessite d'être décomposé en deux parties. En considérant un point de jonction J entre les cellules H et V, comme représenté à la figure 6, une première partie du coût local $\tau_{H,V}(t)$ correspond au coût $\tau_{H,J}(t)$ entre le point de passage 3 de la cellule H et le point de jonction J et une deuxième partie correspond au coût local $\tau_{J,V}(t)$ entre le point de jonction J et le point de passage 3 de la cellule V.
Selon l'algorithme de propagation d'onde classique, le coût $c_V$ associé à une cellule V peut être déterminé par une addition du coût $c_H$ associé à une cellule H et du coût local $\tau_{H,V}(t)$. Selon le procédé de détermination de trajectoire, les coûts $c_Z(d)$ associés à une cellule Z ainsi que les coûts locaux $\tau'_{H,V}(t)$ entre deux cellules H et V ne sont plus des nombres mais des fonctions. L'opération d'addition peut ainsi être remplacée par une opération de composition définie sur la fenêtre temporelle W par la relation suivante :

$$c_V(d) = \left[\tau'_{H,V} \circ (c_H + d)\right](d) \qquad (3)$$

Conformément à cette relation 3, la fonction de coût local $\tau'_{H,V}(t)$ n'est pas composée avec la fonction de coût

$c_H(d)$, mais avec la fonction $c_H(d)+d$. En effet, la fonction de coût $c_H(d)$ représente, pour chaque instant de départ $d$, le temps de parcours nécessaire pour atteindre la cellule H, et non l'instant d'arrivée à la cellule H. L'ajout de l'instant de départ $d$ à la fonction de coût $c_H(d)$ permet ainsi d'obtenir l'instant d'arrivée à la cellule H, et donc l'instant de départ de la cellule H vers la cellule V.

Dans l'algorithme de propagation d'onde classique, une opération de minimum est effectuée lors de la détermination du coût $c_V$ associé à une cellule V. Cette opération de minimum permet de comparer des provenances concurrentes, par exemple $H_1$ et $H_2$, pour une même cellule d'arrivée V et de sélectionner la trajectoire de coût minimal. En pratique, les coûts $c_V^1$ et $c_V^2$, correspondant respectivement aux temps de parcours entre $H_1$ et V et entre $H_2$ et V, sont comparés et le minimum de ces deux coûts est associé à la cellule V. Dans le procédé de détermination de trajectoire selon l'invention, l'opération de minimum peut être appliquée aux fonctions de coût $c_V^i(d)$ sur la fenêtre temporelle W. L'exposant $i$ de $c_V^i(d)$ symbolise les différentes trajectoires en concurrence pour parvenir à la cellule V. Autrement dit, la fonction de coût $c_V(d)$ correspond au minimum des fonctions de coût $c_V^i(d)$ pour chaque instant de départ $d$. Il est à noter que, selon le procédé de détermination de trajectoire, la trajectoire optimale entre la cellule de départ $Z_A$ et une cellule Z peut évoluer en fonction de l'instant de départ $d$.

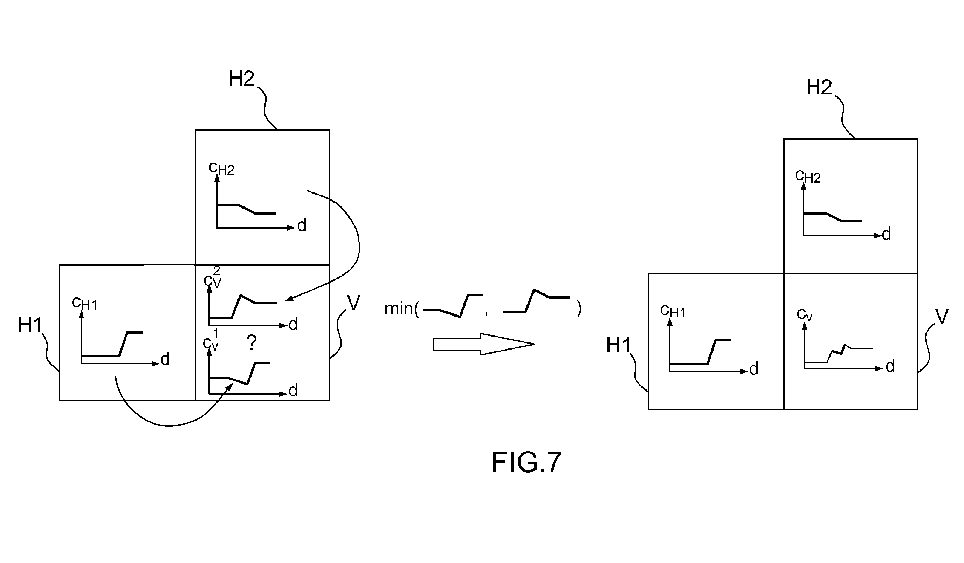

La figure 7 illustre l'opération de minimum appliquée au procédé de détermination de trajectoire selon l'invention. Dans cette figure, on considère deux cellules $H_1$ et $H_2$ appartenant à la tête He du front d'onde Fo et une cellule V adjacente aux cellules $H_1$ et $H_2$. Chaque cellule $H_1$, $H_2$ est développée successivement et permet de construire une fonction de coût $c_V^1(d)$ et $c_V^2(d)$ respectivement. La fonction de coût $c_V(d)$ obtenue correspond alors au minimum des fonctions de coût $c_V^1(d)$ et $c_V^2(d)$ sur la fenêtre temporelle W.

Selon un mode particulier de réalisation du procédé de détermination de trajectoire, les cellules H de la tête He du front d'onde Fo sont développées successivement. L'opération de minimum peut alors consister à minimiser deux fonctions, à savoir la fonction de coût $c_V(d)$ précédemment associée à la cellule V et la fonction de coût $c_V(d)$ correspondant à une trajectoire passant par la cellule Z en cours de développement.

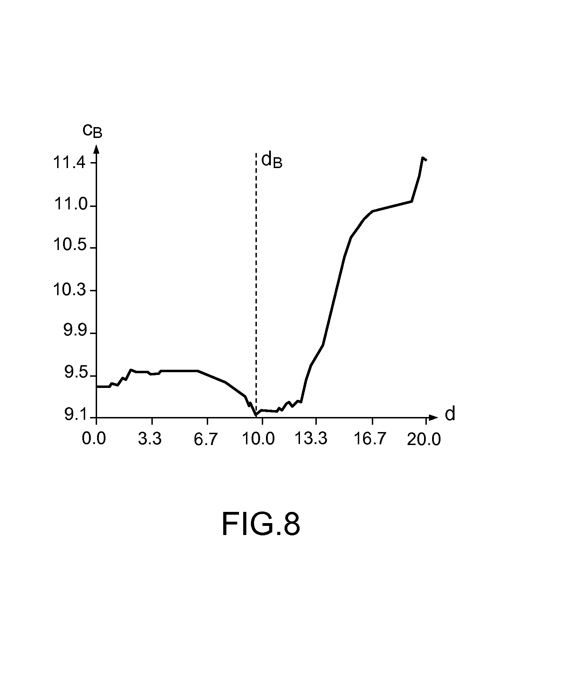

A l'issue de la boucle 32 de propagation du front d'onde Fo, soit lorsque le point d'arrivée B appartient à la tête He du front d'onde Fo, il est possible de déterminer conjointement l'instant de départ optimal $d_B$ et la trajectoire optimale permettant de relier le point de départ A au point d'arrivée B. En effet, une fonction de coût $c_B(d)$ a été construite pour la cellule d'arrivée $Z_B$. Une telle fonction est par exemple représentée à la figure 8. La détermination du minimum $c_B(d_B)$ de la fonction de coût $c_B(d)$ permet de déterminer l'instant de départ optimal $d_B$ pour parvenir à la cellule d'arrivée $Z_B$. Il reste alors à déterminer la trajectoire optimale. Pour cela, les fonctions de coût $c_Z(d)$ de toutes les cellules Z de la grille 2 sont évaluées à l'instant de départ $d_B$. Un coût particulier, égal à $c_Z(d_B)$, étant attribué à chaque cellule Z, le problème de la détermination de la trajectoire optimale est alors comparable au problème de détermination de trajectoire optimale de l'algorithme de propagation d'onde classique. Les méthodes usuellement appliquées à l'algorithme de propagation d'onde classique peuvent alors être appliquées de la même manière au procédé de détermination de trajectoire selon l'invention. En particulier, la trajectoire optimale peut être déterminée par l'algorithme de "hill climbing".

Le procédé de détermination de trajectoire selon l'invention permet par conséquent de déterminer conjointement la trajectoire optimale et l'instant de départ optimal pour un mobile devant se déplacer entre un point de départ A et un pont d'arrivée B dans des conditions de courants variables dans l'espace et dans le temps.

Le procédé de détermination de trajectoire selon l'invention peut notamment être mis en oeuvre par un ordinateur. Tout autre moyen de calcul peut également être utilisé pour mettre en oeuvre ce procédé, dans la mesure où il comporte des moyens pour exécuter les différentes étapes du procédé. Le moyen de calcul doit notamment comporter une mémoire permettant de stocker la liste des cellules F du front d'onde Fo et la liste des cellules H de la tête He du front d'onde Fo, et un calculateur permettant de déterminer les minimums $c_F(d_F)$ des fonctions de coût $c_F(d)$, de comparer ces minimums $c_F(d_F)$ et de composer des fonctions de coût local $\tau'_{H,V}(t)$ avec des fonctions de coût $c_H(d)$.

## Revendications

1. Procédé de détermination d'une trajectoire d'un mobile entre un point de départ (A) et un point d'arrivée (B) situés dans un environnement (1) donné en présence de courants, l'environnement (1) étant discrétisé en plusieurs cellules (Z) comportant chacune un point de passage (3) possible pour le mobile, à chaque cellule (Z) étant associé un vecteur vitesse de courant ($\overline{w}_Z$) variable dans le temps et un coût $c_Z(d)$, **caractérisé en ce que,** le coût $c_Z(d)$ associé à une cellule (Z) représentant le temps de parcours entre le point de départ (A) et le point de passage (3) de ladite cellule (Z) en fonction d'un instant de départ (d) du point de départ (A) compris dans une fenêtre temporelle (W), ledit procédé comporte les étapes suivantes :

• initialiser (31) les fonctions de coût $c_Z(d)$ des cellules (Z) de l'environnement (1) et attribuer à un ensemble Fo de cellules (F) la cellule ($Z_A$) contenant le point de départ (A),
• réitérer les étapes (32) suivantes tant que (325) le point d'arrivée (B) n'est pas contenu dans un ensemble He de cellules (Z) :

○ déterminer (321), parmi l'ensemble Fo de cellules (F), l'ensemble He de cellules (H) pour lesquelles le minimum $c_F(d_F)$ de la fonction de coût $c_F(d)$ est minimal,
○ déterminer (322) un ensemble Vo de cellules (V) adjacentes aux cellules (H) de l'ensemble He et n'ayant pas déjà appartenu à l'ensemble He,
○ déterminer (323) une fonction de coût $c_V(d)$ pour chaque cellule (V) de l'ensemble Vo,
○ supprimer (324) de l'ensemble Fo, les cellules (H) appartenant à l'ensemble He et ajouter à cet ensemble Fo les cellules (V) appartenant à l'ensemble Vo,

• déterminer la trajectoire du mobile à partir des fonctions de coûts $c_Z(d)$.

2. Procédé selon la revendication 1, **caractérisé en ce que** l'étape (323) de détermination de la fonction de coût $c_V$

(d) comprend une étape consistant à déterminer le minimum de différentes fonctions de coût $c_V^i(d)$ pour chaque

instant de départ (d) de la fenêtre temporelle (W), chaque fonction de coût $c_V^i(d)$ correspondant au temps de parcours d'une trajectoire entre le point de départ (A) et le point de passage (3) de la cellule (V) considérée et passant par l'une des différentes cellules ($H_i$) de l'ensemble He.

3. Procédé selon l'une des revendications 1 ou 2, **caractérisé en ce que** l'étape (323) de détermination de la fonction de coût $c_v(d)$ comprend une étape consistant à composer une fonction de coût local $\tau'_{H,V}(t)$, représentant un temps de déplacement entre le point de passage (3) d'une cellule (H) considérée parmi l'ensemble He et le point de passage (3) de la cellule (V) considérée parmi l'ensemble Vo, avec la fonction de coût $c_H(d)$ associée à la cellule (H) considérée parmi l'ensemble He selon la relation :

$$c_V\left(\grave{d}\right)' = \left[\tau'_{H,V} \circ \left(c_H + \dot{d}\right)\right]\left(d\right).$$

4. Procédé selon la revendication 3, **caractérisé en ce que,** des cartes de courants $C_i$, i étant un entier compris entre 1 et k, modélisant les vecteurs vitesse des courants $\overline{w}_Z$ entre des instants $t = t_{i-1}$ et des instants $t = t_i$ dans un repère (O, x, y), les instants $t = t_0 = 0$ et $t = t_k = T$ formant les bornes de la fenêtre temporelle (W), la fonction de coût local $\tau'_{H,V}(t)$ est définie à partir d'un coût local $\tau_{H,V}(t)$ par les relations :

• pour $t \geq t_k$,

$$\tau'_{H,V}\left(t\right) = \tau_{H,V}\left(T\right),$$

• $\forall i \in [1,k]$, si $t_i - \tau_{H,V}(t_i-1) \geq t_{i-1}$,

• pour $t \in [t_{i-1}; t_i - \tau_{H,V}(t_{i-1})]$,

$$\tau'_{H,V}\left(t\right) = \tau_{H,V}\left(t_{i-1}\right),$$

• pour $t \in [t_i - \tau_{H,V}(t_{i-1}); t_i]$,

$$\tau'_{H,V}(t) = \left(\frac{\tau'_{H,V}(t_i)}{\tau_{H,V}(t_{i-1})} - 1\right) t + \left[\tau_{H,V}(t_i) - t_i \cdot \left(\frac{\tau'_{H,V}(t_i)}{\tau_{H,V}(t_{i-1})} - 1\right)\right],$$

• $\forall i \in [1,k]$, si $t_i - \tau_{H,V}(t_{i-1}) < t_{i-1}$,

   • pour $t \in [t_{i-1}; t_i]$,

$$\tau'_{H,V}(t) = \left(\frac{\tau'_{H,V}(t_i)}{\tau_{H,V}(t_{i-1})} - 1\right) t + \left[\tau_{H,V}(t_i) - t_i \cdot \left(\frac{\tau'_{H,V}(t_i)}{\tau_{H,V}(t_{i-1})} - 1\right)\right],$$

avec $\tau_{H,V}(t) = \dfrac{-\left(w_x(t).\delta x + w_y(t).\delta y\right) + \sqrt{v^2.\left(\delta x^2 + \delta y^2\right) - \left(w_x(t).\delta y - w_y(t).\delta x\right)^2}}{v^2 - w(t)^2}$,

les points de passage (3) des cellules (H, V) considérées étant repérés dans le repère (O, x, y) par des coordonnées $(x_H ; y_H)$ et $(x_V ; y_V)$, les quantités $\delta x = x_V - x_H$ et $\delta y = y_V - y_H$ représentent respectivement des différences d'abscisse et d'ordonnée entre les cellules (H, V) considérées, $w_x(t)$ et $w_y(t)$ représentant des coordonnées dans le repère (O, x, y) des vecteurs vitesses de courants $\overline{w}_H$ et $\overline{w}_V$ associés aux cellules (H, V) considérées à l'instant $t$,

$w(t) = \sqrt{w_x(t)^2 + w_y(t)^2}$ représentant un module des vecteurs vitesse de courants $\overline{w}_H$ et $\overline{w}_V$ à l'instant $t$ et $v$ représentant une vitesse du mobile par rapport aux vecteurs vitesses de courants $\overline{w}_H$ et $\overline{w}_V$.

5. Procédé selon l'une quelconque des revendications 3 ou 4, **caractérisé en ce que**, dans le cas où les vecteurs vitesse de courants $\overline{w}_H$ et $\overline{w}_V$ associés aux cellules (H, V) considérées diffèrent l'un de l'autre, le coût local $\tau_{H,V}(t)$ est décomposé en un premier coût local $\tau_{H,J}(t)$ représentant le temps de parcours entre le point de passage (3) de la première cellule (H) considérée et un point d'intersection (J) des deux cellules (H, V) considérées et un deuxième coût local $\tau_{J,V}(t)$ représentant le temps de parcours entre le point d'intersection (J) des deux cellules (H, V) considérées et le point de passage (3) de la deuxième cellule (V) considérée.

6. Procédé selon l'une quelconque des revendications précédentes, **caractérisé en ce que** l'étape (31) d'initialisation des fonctions de coûts $c_Z(d)$ comprend une étape consistant à attribuer à chaque cellule (Z) une fonction de coût $c_Z(d)$ constante sur la fenêtre temporelle (W) et de valeur infinie.

7. Procédé selon l'une quelconque des revendications précédentes, **caractérisé en ce que** l'étape de détermination de la trajectoire du mobile comprend les sous-étapes suivantes :

   • déterminer un instant de départ ($d_B$) correspondant au minimum ($c_B(d_B)$) de la fonction de coût $c_B(d)$ associée à la cellule ($Z_B$) contenant le point d'arrivée (B),
   • évaluer les fonctions de coût $c_Z(d)$ de toutes les cellules (Z) de l'environnement (1) pour cet instant de départ ($d_B$),
   • déterminer une séquence de cellules (Z) partant de la cellule ($Z_B$) contenant le point d'arrivée (B) et rejoignant la cellule ($Z_A$) contenant le point de départ (A) en passant par les cellules (Z) dont les valeurs des fonctions de coût ($c_Z(d_B)$) évaluées à l'instant de départ ($d_B$) sont minimales.

FIG.1

FIG.2

FIG.3

FIG.4

FIG.5

FIG.6

FIG.7

FIG.8

**EP 2 128 731 A1**

Europäisches
Patentamt

European
Patent Office

Office européen
des brevets

## RAPPORT DE RECHERCHE EUROPEENNE

Numéro de la demande

EP 09 16 1419

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | DORST L ET AL: "OPTIMAL PATH PLANNING BY COST WAVE PROPAGATION IN METRIC CONFIGURATION SPACE" PROCEEDINGS OF THE SPIE, SPIE, BELLINGHAM, VA, US, vol. 1007, 10 novembre 1988 (1988-11-10), pages 186-197, XP000748370 ISSN: 0277-786X * le document en entier * ----- | 1-7 | INV. G05D1/00 G05D1/02 B60W40/02 G01C21/20 |
| X | DORST L ET AL: "THE GEOMETRICAL REPRESENTATION OF PATH PLANNING PROBLEMS" ROBOTICS AND AUTONOMOUS SYSTEMS, ELSEVIER SCIENCE PUBLISHERS, AMSTERDAM, NL, vol. 7, no. 2 / 03, 1 août 1991 (1991-08-01), pages 181-195, XP000219090 ISSN: 0921-8890 * le document en entier * ----- | 1-7 | |
| X,D | PETRES C ET AL: "Underwater path planing using fast marching algorithms" OCEANS 2005 - EUROPE BREST, FRANCE 20-23 JUNE 2005, PISCATAWAY, NJ, USA,IEEE, US, vol. 2, 20 juin 2005 (2005-06-20), pages 814-819Vol.2, XP010838256 ISBN: 978-0-7803-9103-1 * le document en entier * ----- | 1-7 | **DOMAINES TECHNIQUES RECHERCHES (IPC)** G05D G01C B60W |
| X,D | M. SOULIGNAC, P. TAILLIBERT, M.RUEHER: "Adapting the Wavefront expansion in Presence of Strong Currents" 2008 IEEE INTERNATIONAL CONFERENCE ON ROBOTICS AND AUTOMATION, 19 mai 2008 (2008-05-19), - 23 mai 2008 (2008-05-23) pages 1352-1358, XP002529281 Pasadena, CA, USA * le document en entier * ----- | 1-7 | |

Le présent rapport a été établi pour toutes les revendications

| Lieu de la recherche | Date d'achèvement de la recherche | Examinateur |
|---|---|---|
| La Haye | 26 juin 2009 | Polednicek, Milos |

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **INANC, T. ; S.C. SHADDEN ; J.E. MARSDEN.** Optimal trajectory generation in ocean flows. *Proceedings of the American Control Conference,* 2005, 674-679
- **PANNEQUIN, J. ; A. BAYEN ; I. MITCHELL ; H. CHUNG ; S. SASTRY.** Multiple aircraft deconflicted path planning with weather avoidance constraints. *Proceedings of the AIAA Guidance, Navigation and Control Conference,* 2007
- **RUBIO, J. ; S. KRAGELUND.** The trans-pacific crossing: long range adaptive path planning for UAVs through variable wind fields. *Proceedings of the Digital Avionics Systems Conference*
- **ALVAREZ, A. ; A. CAITI ; R. ONKEN.** Evolutionary path planning for autonomous vehicles in a variable ocean. *Journal of Oceanic Engineering,* 2004, vol. 29, 418-429
- **GARAU, B. ; A. ALVAREZ ; G. OLIVER.** Path planning of autonomous underwater vehicles in current fields with complex spatial variability: an A* approach. *Proceedings of the International Conference on Robotics and Automation,* 2005, 194-198
- **PETRES, C. ; Y. PAILHAS ; Y. PETILLOT ; D. LANE.** Underwater path planning using fast marching algorithms. *Proceedings of Oceans 2005 - Europe,* 2005, 814-819
- **SOULIGNAC, M. ; P. TAILLIBERT ; M. RUEHER.** Adapting the wavefront expansion in presence of strong currents. *Proceedings of the International Conference on Robotics and Automation,* 2008
- **DORST, L. ; K. TROVATO.** Optimal path planning by cost wave propagation in metric configuration space. *Proceedings of SPIE - The International Society for Optical Engineering,* 1988, 186-197